(19) Europäisches Patentamt

European Patent Office

Office européen des brevets

(11) EP 0 855 577 A1

(12) **EUROPÄISCHE PATENTANMELDUNG**

(43) Veröffentlichungstag:
29.07.1998 Patentblatt 1998/31

(51) Int. Cl.⁶: $G01F\ 1/66$

(21) Anmeldenummer: 97101252.1

(22) Anmeldetag: 28.01.1997

(84) Benannte Vertragsstaaten:
AT BE CH DE DK ES FI FR GB GR IE IT LI LU MC NL PT SE
Benannte Erstreckungsstaaten:
LT

(71) Anmelder:
Electrowatt Technology Innovation AG
6301 Zug (CH)

(72) Erfinder:
• Eusemann, Roland
  61138 Niederdorffelden (DE)
• Bulinsky, Mirko
  6006 Luzern (CH)

(54) **Verfahren zur selbsttätigen Einstellung von Parametern eines Ultraschall-Messwertgebers**

(57) Ein Verfahren zur selbsttätigen Bestimmung der im Normalbetrieb eines Ultraschall-Messwertgebers bei Laufzeitmessungen zu verwendenden Sendepolarität eines wechselförmigen Signals, mit dem ein als Sender dienender Ultraschallwandler (1; 2) beaufschlagt wird, und, fakultativ, weiterer Parameter, welche die Laufzeitmessung beeinflussen, wobei das von einem als Empfänger dienenden Ultraschallwandler (2; 1) erzeugte Empfangssignal (24) einem Komparator (18) zugeführt wird und wobei die erste oder eine andere, vorbestimmte Flanke der Ausgangsimpulse des Komparators (18) die Laufzeitmessung stoppt, umfasst die folgenden Schritte:

-  Durchführen von n einzelnen Laufzeitmessungen mit jeweils verschiedenen Werten der Parameter, wobei einer der Parameter die Sendepolarität ist,

-  Bestimmen derjenigen Laufzeit, die vorgegebenen Kriterien genügt,

-  Bestimmen der Werte der Parameter, die zu dieser Laufzeit gehören, und

-  Ändern der Werte dieser Parameter gemäss vorbestimmten Gesetzmässigkeiten.

Fig. 1

Printed by Xerox (UK) Business Services
2.16.3/3.4

EP 0 855 577 A1

**Beschreibung**

Die Erfindung betrifft ein Verfahren zur selbsttätigen optimalen Einstellung von Parametern, die die Laufzeit eines Ultraschallsignals in einem Ultraschall-Messwertgeber beeinflussen.

Solche Ultraschall-Messwertgeber werden beispielsweise in Wärmemengenzählern verwendet.

Um den Eintreffzeitpunkt eines Ultraschallsignals nach Durcheilung einer von einem Medium durchströmten Ultraschallmessstrecke mit hoher Genauigkeit bestimmen zu können, ist es erforderlich, dass die Polarität des Empfangssignals definiert ist. Der als Sender dienende Ultraschallwandler, der aus einer Keramikscheibe besteht, deren beide Stirnflächen mit einer Elektrode versehen sind, schwingt je nach der Polarisationsrichtung des keramischen Materials in Phase oder gegenphasig zum elektrischen Signal, mit dem er beaufschlagt wird. Ebenso hängt die Polarität des Empfangssignals von der Polarisationsrichtung des keramischen Materials des als Empfänger dienenden Ultraschallwandlers ab. Die Herstellung von Ultraschallwandlern mit definierter Polarisationsrichtung ist aufwendig und teuer.

Der Erfindung liegt daher die Aufgabe zugrunde, ein Verfahren vorzuschlagen, mit dem die Sendepolarität des Signals, mit dem der sendende Ultraschallwandler beaufschlagt werden soll, damit die Polarität des Empfangssignals korrekt ist, selbsttätig bestimmbar ist.

Die genannte Aufgabe wird erfindungsgemäss gelöst durch die Merkmale des Anspruches 1. Weiterbildungen der Erfindung ergeben sich aus den abhängigen Ansprüchen.

Nachfolgend wird ein Ausführungsbeispiel der Erfindung anhand der Zeichnung näher erläutert.

Es zeigen:

Fig. 1      eine Schaltung zur Messung der Schallgeschwindigkeit in einem Medium, das eine Ultraschallmessstrecke durchströmt,

Fig. 2a-d    von einer Sendeschaltung erzeugbare Ultraschallbursts und

Fig. 3a-d    Spannungsdiagramme mit Empfangssignalen.

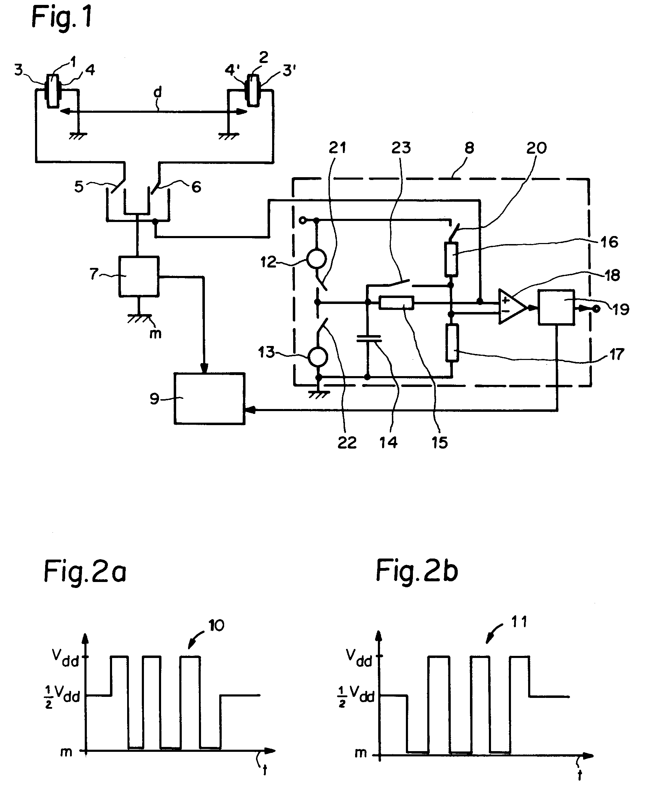

Die Fig. 1 zeigt schematisch zwei Ultraschallwandler 1 und 2, zwischen denen eine von einem Medium wie beispielsweise Wasser oder Gas durchströmte Ultraschallmessstrecke der Länge d gebildet ist. Die Ultraschallwandler 1 und 2 weisen je eine Elektrode 3 bzw. 3' auf, die mittels Schaltern 5 und 6 mit einer Sendeschaltung 7 oder mit einer Empfangsschaltung 8 verbindbar sind. Die Sende- und die Empfangsschaltung 7 bzw. 8 sind unipolar mit einer Betriebsspannung $V_{dd}$ gegenüber Masse m gespeist. Eine zweite Elektrode 4 bzw. 4' der Ultraschallwandler 1 und 2, vorzugsweise die gegen die Ultraschallmessstrecke gerichtete Elektrode, ist direkt mit der Masse m verbunden. Die Sende- und die Empfangsschaltung 7 bzw. 8 steuern ein Zeitmessglied 9, um die Laufzeit eines Ultraschallsignals zu bestimmen, das vom sendenden Ultraschallwandler 1 oder 2 durch die Ultraschallmessstrecke hindurch zum empfangenden Ultraschallwandler 2 bzw. 1 gelangt.

Es werden wenigstens zwei Betriebsarten unterschieden: die Betriebsart "Normal" und die Betriebsart "Abgleich". In der Betriebsart "Abgleich" werden die Werte verschiedener Parameter bestimmt, die in der Betriebsart "Normal", d.h. im Normalbetrieb, zu verwenden sind.

Zur Bestimmung der Laufzeit, die ein Ultraschallsignal benötigt, um im Medium vom Ultraschallwandler 1 zum Ultraschallwandler 2 zu gelangen, arbeitet die Sendeschaltung 7 wie folgt: Vorzugsweise wird die mit der Sendeschaltung 7 verbundene Elektrode 3 bzw. 3' vor dem Senden eines Ultraschallsignals für eine vorbestimmte minimale Zeitdauer auf das Potential $V_{dd}/2$ gelegt. Anschliessend gibt die Sendeschaltung 7 entweder den in der Fig. 2a oder den in der Fig. 2b, im Verlauf der Zeit t dargestellten, Ultraschallburst 10 bzw. 11 ab und startet einen Zähler im Zeitmessglied 9. Jeder Ultraschallburst 10, 11 besteht aus rechteckförmigen Wellenzügen, deren Frequenz $f_1$ möglichst nahe bei der Resonanzfrequenz $f_R$ der anzuregenden Dickenschwingung liegt. Sie beträgt etwa 1 MHz. Die Anzahl der Wellenzüge beträgt typisch drei. Die Ultraschallbursts 10 und 11 weisen eine unterschiedliche Sendepolarität auf, d.h. beim Ultraschallburst 10 steigt die Spannung beim ersten Wellenzug auf $V_{dd}$ (positive Polarität), beim Ultraschallburst 11 sinkt die Spannung beim ersten Wellenzug hingegen auf Masse m (negative Polarität).

Das Vorspannen des Ultraschallwandlers 1 auf $V_{dd}/2$ vor dem Senden führt dazu, dass der Ultraschallwandler 1 hauptsächlich zu ausgeprägten Dickenschwingungen und nicht zu unerwünschten Radialschwingungen angeregt wird. Dieser Effekt rührt daher, dass das Anregungssignal keinen Gleichspannungsanteil enthält und daher das Frequenzspektrum optimal ist. Der Ultraschallwandler 1 erzeugt im Medium ein Wellenpaket, das aus "sinusförmigen" Ultraschallwellen mit zunächst zu- und dann abnehmender Amplitude besteht, entsprechend dem aufgeprägten Einschwing- und einem freien Ausschwingvorgang. Die Frequenz dieses Wellenpaketes ist in etwa gleich der Resonanzfrequenz $f_R$, da der Ultraschallburst mit nur drei Schwingungsperioden sehr kurz ist und daher seine Frequenz $f_1$ dem sendenden Ultraschallwandler 1 oder 2 noch nicht einzuprägen vermag. Das Wellenpaket weist mehr als drei Wellenzüge auf, da der Ultraschallwandler 1 bzw. 2 nicht sofort stillsteht, wenn die Anregung zu Ende ist.

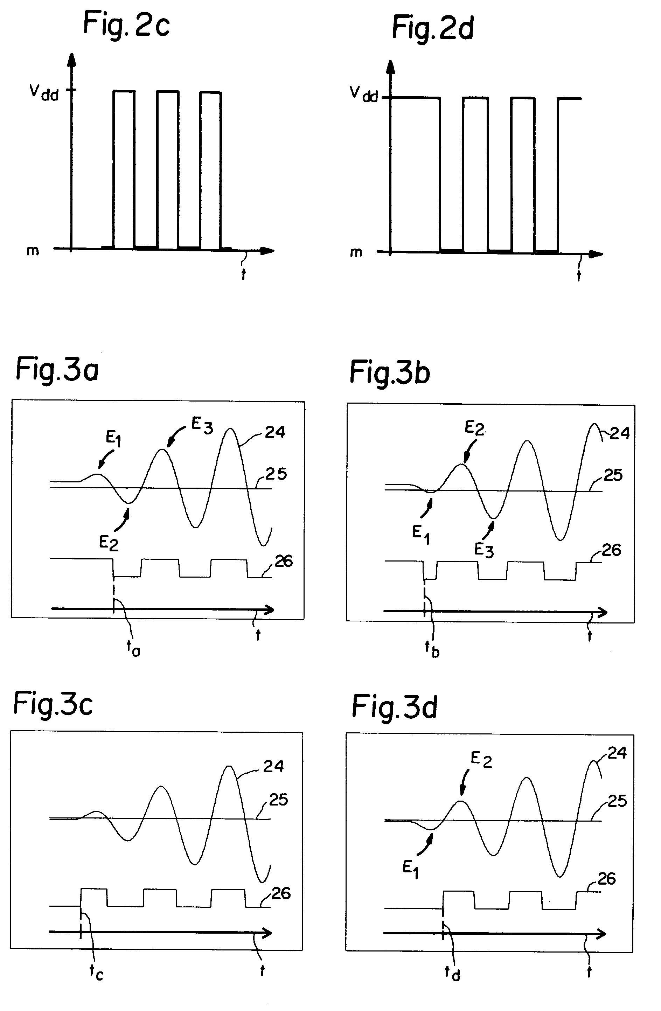

Es wäre auch möglich, dass die Sendeschaltung den in der Fig. 2c oder Fig. 2d dargestellten Ultraschallburst erzeugt, bei dem die Spannung beim ersten Wellenzug von Masse m auf $V_{dd}$ ansteigt bzw. von $V_{dd}$ auf Masse m abfällt.

Bei dieser Art der Anregung des Ultraschallwandlers 1 ist zwar die Amplitude des das Medium durcheilenden Wellenpaketes grösser als bei einer Anregung mit dem in der Fig. 2a dargestellten Ultraschallburst. Nachteilig ist jedoch, dass der Ultraschallwandler 1 auch zu unerwünschten Radialschwingungen angeregt wird, die sich den Dickenschwingungen überlagern. Darüberhinaus treten bei der Umschaltung vom Senden auf Empfangen und beim Wechsel der Polarität des Sendesignals Spannungssprünge an den Ultraschallwandlern auf, die zur Anregung von Störsignalen im Medium führen. Die Detektion des Eintreffzeitpunkts des Ultraschallbursts wird dadurch erschwert, dass die Signalform eines solchen Empfangssignals einen komplizierteren und von Wandler zu Wandler variierenden Verlauf annimmt.

Die Empfangsschaltung 8 weist zwei in Reihe geschaltete Stromquellen 12, 13, einen Kondensator 14, einen Widerstand 15, einen durch zwei Widerstände 16, 17 gebildeten Spannungsteiler, einen Komparator 18, ein Zeitstoppglied 19, sowie vier Schalter 20 - 23 auf. Die Verdrahtung ist direkt der Fig. 1 zu entnehmen. Der Widerstand 15 ist im Vergleich zur Impedanz der Ultraschallwandler 1 bzw. 2 hochohmig gewählt, um ein grosses Empfangssignal zu erzeugen.

Die Messung der Laufzeit des Ultraschallbursts im Medium erfolgt beispielsweise, indem die Sendeschaltung 7 den Ultraschallburst an den Ultraschallwandler 1 abgibt und einen Zähler im Zeitmessglied 9 startet, der mit einer Frequenz $f_2$ anfallende Abtastimpulse zählt, bis vom Zeitstoppglied 19 ein Signal zum Stoppen des Zählers eintrifft. Die Frequenz $f_2$ ist vorzugsweise etwa 10 mal grösser als die Frequenz $f_1$.

Das Empfangssignal ist im wesentlichen ein amplitudenmoduliertes Sinussignal und weist ebenfalls eine positive oder eine negative Polarität auf, d.h. die erste Halbwelle des Empfangssignals kann positiv oder negativ sein. Falls die Ultraschallwandler 1 und 2 gleichphasig schwingen, ist die Empfangspolarität gleich der Sendepolarität, andernfalls sind die Empfangspolarität und die Sendepolarität verschieden. Die Ultraschallwandler 1, 2 bestehen aus einer Keramikscheibe, auf die die Elektroden 3, 4 bzw. 3', 4' aufgebracht sind. Ob die Ultraschallwandler 1 und 2 gleichphasig schwingen, hängt einerseits von der Polarisationsrichtung der Keramikscheibe und andererseits davon ab, welche zwei der vier Elektroden 3, 4, 3' und 4' mit der Masse m verbunden sind. Da die Polarität des Empfangssignals mit der Polarität des Sendesignals gekoppelt ist, bewirkt das Invertieren des Sendesignals eine invertierte Polarität des Empfangssignals.

Die Empfangsschaltung 8 arbeitet wie folgt: Zuerst wird der Kondensator 14 durch Schliessen der Schalter 20 und 23 auf die Spannung $V_{dd}/2$ aufgeladen. Sobald der Kondensator 14 aufgeladen ist, wird der Schalter 23 wieder geöffnet. Anschliessend wird, fakultativ, das DC-Potential des Kondensators 14 durch Schliessen des Schalters 21 oder des Schalters 22 für eine vorbestimmte Zeitdauer $\tau$ um eine vorbestimmte Spannung $+ |\Delta U_1|$ erhöht auf $V_{dd}/2 + |\Delta U_1|$ bzw. um die Spannung $- |\Delta U_1|$ abgesenkt auf $V_{dd}/2 - |U_1|$. Trifft nun das vom Ultraschallwandler 1 gesendete Ultraschallwellenpaket beim Ultraschallwandler 2 ein, dann vergleicht der Komparator 18 das um den Offset $U_0$ des Komparators 18 und gegebenenfalls um die Spannung $\Delta U_1$ verschobene Empfangssignal mit der Spannung $V_{dd}/2$. Der Komparator 18 wandelt das sinusförmige Empfangssignal in eine Folge von Rechteckimpulsen um. Das Zeitstoppglied 19 stoppt den Zähler des Zeitmessglieds 9, sobald es die erste oder eine andere, vorbestimmte Flanke dieser Rechteckimpulse feststellt. Sobald das Signal zum Stoppen des Zählers abgegeben ist, wird, gegebenenfalls, die Erhöhung bzw. Absenkung des DC-Potentials des Kondensators 14 wieder rückgängig gemacht, indem zuerst die andere der beiden Stromquellen 12 oder 13 für die Zeitdauer $\tau$ mit dem Kondensator 14 verbunden wird und dann durch Schliessen des Schalters 23 der Kondensator 14 auf exakt das Potential am invertierenden Eingang des Komparators 18 auf- oder entladen wird.

Ein vollständiger Messzyklus für eine Einzelmessung der Laufzeit besteht vorzugsweise darin, dass die Sendeschaltung 7 den sendenden Ultraschallwandler vorspannt auf $V_{dd}/2$, dass die Empfangsschaltung 8 die Absenkung oder Erhöhung des DC-Potentials des Kondensators 14 veranlasst, dass die Sendeschaltung 7 den sendenden Ultraschallwandler mit dem Ultraschallburst 10 bzw. 11 beaufschlagt und die Zeitmessung startet, dass die Empfangsschaltung 8 den eintreffenden Ultraschallburst erfasst und die Zeitmessung stoppt und dass die Empfangsschaltung 8 die Absenkung oder Erhöhung des DC-Potentials des Kondensators 14 wieder rückgängig macht. Auf diese Weise sind die Parameter Sendepolarität und Erhöhung oder Absenkung des DC-Potentials für jede Einzelmessung vorgebbar, ohne dass die Vorgeschichte berücksichtigt werden muss.

Die Polarität des Ultraschallbursts, mit dem der sendende Ultraschallwandler 1 bzw. 2 im Normalbetrieb beaufschlagt wird, und gegebenenfalls das Vorzeichen der Spannung $\Delta U_1$ wird in der Betriebsart "Abgleich" gemäss einem der weiter unten erläuterten Verfahren festgelegt.

Die Fig. 3a - d zeigen das am nicht-invertierenden Eingang des Komparators 18 eintreffende Empfangssignal 24, die am invertierenden Eingang des Komparators 18 anliegende Vergleichsspannung 25 und das Signal 26 am Ausgang des Komparators 18 für die vier möglichen Fälle, die sich dadurch ergeben, dass die effektive Schwellspannung $U_S$, das ist die unmittelbar vor dem Eintreffen und während des Eintreffens des Empfangssignals 24 zwischen den beiden Eingängen des Komparators 18 anliegende Gleichspannung, positiv oder negativ sein kann und dass die Polarität des Empfangssignals 24 ebenfalls positiv oder negativ sein kann. In der folgenden Tabelle sind die vier Fälle den Fig. 3a - d entsprechend zusammengestellt:

| Figur | effektive Schwellspannung $U_S$ | Polarität des Empfangssignals 24 |
|-------|--------------------------------|----------------------------------|
| 3a | positiv | positiv |
| 3b | positiv | negativ |
| 3c | negativ | positiv |
| 3d | negativ | negativ |

Der Zeitpunkt der ersten Flanke des Ausgangssignals 26 des Komparators 18 ist entsprechend der Nummerierung der Figuren 3a - d mit $t_a$, $t_b$, $t_c$ bzw. $t_d$ bezeichnet. Die effektive Schwellspannung $U_S$ ist gleich der Summe der angelegten Spannung $\Delta U_1$ und des Offsets $U_0$ des Komparators 18. Sie hat demzufolge entweder den Wert $\Delta U_1 + U_0$ oder $-\Delta U_1 + U_0$. Das Empfangssignal 24 weist mehrere Extrema $E_1$ bis $E_n$ auf. Für die Betriebsart "Abgleich" werden nun verschiedene Varianten erläutert, mit denen eine optimale Einstellung der beiden Parameter für die Betriebsart "Normal" erreicht werden kann.

Variante 1

Auf das Verschieben des DC-Potentials des Kondensators 14 wird verzichtet, die Stromquellen 12 und 13 entfallen. Die effektive Schwellspannung $U_S$ ist daher gleich dem Offset $U_0$ des Komparators 18. Sie kann positiv oder negativ sein. Zur Bestimmung der optimalen Polarität des Sendesignals wird der Ultraschallwandler 1 zuerst mit einem Signal mit positiver Polarität beaufschlagt, vorzugsweise mit dem in der Fig. 2a gezeigten Ultraschallburst 10, und anschliessend mit einem Signal mit negativer Polarität, vorzugsweise mit dem in der Fig. 2b gezeigten Ultraschallburst 11. Mittels einer Zeitmessung wird der Zeitpunkt $t_1$ bzw. $t_2$ bestimmt, bei dem der Pegel des Ausgangssignals des Komparators 18 zum ersten Mal von hoch auf tief oder von tief auf hoch wechselt. Falls die Schwellspannung $U_S$ positiv ist, gilt entweder $t_1 = t_a$ und $t_2 = t_b$ oder $t_1 = t_b$ und $t_2 = t_a$. Wie den Fig. 3a und 3b direkt zu entnehmen ist, ist die Zeit $t_a$ immer länger als die Zeit $t_b$. Die optimale Einstellung der Sendepolarität ist dadurch charakterisiert, dass der "Nulldurchgang" zwischen dem ersten Extremum $E_1$ und dem zweiten Extremum $E_2$ des Empfangssignals 24 die Zeitmessung stoppt. Die optimale Einstellung der Sendepolarität ist nun also die in der Fig. 3a gezeigte, das ist diejenige mit der längeren Zeit $t_a$. Falls die Schwellspannung $U_S$ negativ ist, gilt entweder $t_1 = t_c$ und $t_2 = t_d$ oder $t_1 = t_c$ und $t_2 = t_d$. Wie den Fig. 3c und 3d zu entnehmen ist, ist die Zeit $t_d$ immer länger als die Zeit $t_c$. Die optimale Einstellung der Sendepolarität ist in diesem Fall die in der Fig. 3d gezeigte, also diejenige mit der längeren Zeit $t_d$. In beiden Fällen wird in der Betriebsart "Normal" somit diejenige Sendepolarität verwendet, die in der Betriebsart "Abgleich" zu der längeren der beiden Zeiten $t_1$ und $t_2$ führte.

Variante 2

Das DC-Potential des Kondensators 14 wird entweder um die Spannung $+ |\Delta U_1|$ erhöht oder um die Spannung $- |\Delta U_1|$ abgesenkt, indem mittels des Schalters 21 die Stromquelle 12 bzw. mittels des Schalters 22 die Stromquelle 13 für eine vorbestimmte Zeitdauer mit dem Kondensator 14 verbunden wird. Analog zur Variante 1 werden zwei Einzelmessungen mit unterschiedlicher Sendepolarität durchgeführt und dann für den Normalbetrieb diejenige Einstellung ermittelt, bei der sich die längere der beiden Zeiten $t_1$ und $t_2$ ergibt.

Durch die Pegelerhöhung bzw. Pegelabsenkung der Komparatorschwelle um $U_1$ werden Störsignale unterdrückt, die zwar etwa die Frequenz $f_1$ aufweisen, deren Amplitude jedoch gering ist. Solche Störsignale treten z.B. als dem Nutzsignal vorauseilende Signale auf, wenn ein Teil der Schallenergie auf einem durch das die Ultraschallmessstrecke umgebende Gehäuse vom sendenden Ultraschallwandler 1 zum empfangenden Ultraschallwandler 2 gelangt.

Variante 3

Das DC-Potential des Kondensators 14 wird sowohl um die Spannung $+ |\Delta U_1|$ erhöht als auch um die Spannung $- |\Delta U_1|$ abgesenkt. Für beide Einstellungen erfolgt eine Messung mit positiver und eine Messung mit negativer Sendepolarität des Ultraschallbursts. Es werden also vier Einzelmessungen durchgeführt. Falls nun besonders Wert auf eine hohe Unterdrückung von Störsignalen gelegt wird, dann wird als optimale Einstellung der Sendepolarität und des Vorzeichens der Spannung $|\Delta U_1|$ die Einstellung gemäss der Fig. 3a ermittelt, das ist die Einstellung mit der längsten Zeit $t_a$. Falls besonderer Wert auf eine hohe Langzeitstabilität der Messung gelegt wird, dann wird die Einstellung gemäss der Fig. 3d ausgewählt. Bei dieser Einstellung ist nämlich die Differenz zwischen dem Extremum $E_2$ und der Vergleichsspannung 25 am grössten, so dass eine altersbedingte Verkleinerung der Amplitude des Empfangssignals 24 und mithin des Extremums $E_2$ im Vergleich zu den anderen Einstellungen eine grössere Verkleinerung der Amplitude ohne Messfehler zulässt. Ein Messfehler resultiert nämlich dann, wenn infolge einer Verkleinerung der Amplitude des Empfangssignals 24 erst der Nulldurchgang zwischen dem zweiten und dem dritten Extremum $E_2$ bzw. $E_3$ die Zeitmessung stoppt.

Variante 4

Bei dieser Variante ist am Zeitstoppglied 19 (Fig. 1) einstellbar, ob die Zeitmessung beim Auftreffen der ersten positiven oder beim Eintreffen der ersten negativen Flanke des Ausgangssignals 26 gestoppt wird. In der Betriebsart "Abgleich" werden demzufolge die drei Parameter Polarität des Sendesignals, Vorzeichen der Spannung $|\Delta U_1|$ und Flankenrichtung - steigend oder fallend - variiert und acht Laufzeiten ermittelt. Aus den Figuren 3a - d ist ersichtlich, dass man bei geforderter hoher Langzeitstabilität die optimale Einstellung gemäss der Fig. 3d durch folgendes Vorgehen erhält:

- Bestimmung der Einstellung, die die kürzeste Laufzeit ergibt. Im Beispiel ist dies die Einstellung gemäss Fig. 3c, wenn die zu detektierende Flankenrichtung die steigende ist.
- Invertieren der Polarität des Sendesignals. Damit gelangt man zur Einstellung gemäss Fig. 3d, wobei dann der "Nulldurchgang" zwischen dem Extremum $E_1$ und dem Extremum $E_2$ die Zeitmessung stoppt.

Bei der Optimierung auf eine möglichst gute Unterdrückung von Störsignalen, ist die Einstellung gemäss Fig. 3a die optimale. Zu dieser Einstellung gelangt man durch:

- Bestimmung der Einstellung, die die kürzeste Laufzeit ergibt. Im Beispiel ist dies die Einstellung gemäss Fig. 3c, wenn die zu detektierende Flankenrichtung die steigende ist.
- Invertieren des Vorzeichens der Spannung $|\Delta U_1|$ und Invertieren der zu detektierenden Flankenrichtung. Damit gelangt man zur Einstellung gemäss Fig. 3a, wobei dann wiederum der "Nulldurchgang" zwischen dem Extremum $E_1$ und dem Extremum $E_2$ die Zeitmessung stoppt.

Der Betrag der Spannung $|\Delta U_1|$ ist bei den Varianten 2 bis 4 gegebenenfalls einerseits grösser als der maximal mögliche Betrag des Offsets $|U_0|$ und andererseits kleiner als die Differenz $|E_1| - |U_0|$, d.h. also $|\Delta U_1| > |U_0|$ und $|\Delta U_1| < |E_1| - |U_0|$, zu wählen. Damit wird verhindert, dass beim Abgleich ein Resultat entsteht, nach dem statt der Extrema $E_1$ und $E_2$ die Extrema $E_2$ und $E_3$ die im Normalbetrieb zu verwendende Einstellung bestimmen.

Die Stromquellen 12 und/oder 13 können nun noch für eine weitere Aufgabe eingesetzt werden, nämlich für die Bestimmung des grössten der Extrema $E_1$ bis $E_n$. Dazu wird die Spannung $|\Delta U_1|$ in diskreten Schritten erhöht, bis das Signal am Ausgang des Komparators 18 gleichförmig wird und die Zeitmessung somit nicht gestoppt wird. Anschliessend wird die Spannung $|\Delta U_1|$ in diskreten Schritten erniedrigt, bis das Signal am Ausgang des Komparators 18 wiederum gleichförmig und die Zeitmessung somit nicht gestoppt wird. Das periodische Einholen dieser Information gibt Aufschluss darüber, ob das Empfangssignal 24 einer unzulässigen Änderung unterlag, eventuell infolge Alterung der Messanordnung. Diese Information kann auch dazu benützt werden, nach einer allfällig festgestellten starken Verkleinerung des Empfangssignals 24 das Abgleichverfahren erneut durchzuführen mit dem Ziel, dass der "Nulldurchgang" zwischen dem zweiten und dem dritten Extremum $E_2$ und $E_3$ zum Stoppen der Zeitmessung dient. Durch Korrektur der dadurch zusätzlich entstehenden Zeitverzögerung können Messfehler infolge Alterungseffekten dieser Art ausgeschlossen werden.

Bei Weiterbildungen der Erfindung ist das Zeitstoppglied 19 als Teil eines Filters ausgebildet, wobei das Filter eingerichtet ist, weitere Eigenschaften des Empfangssignals 24 zu überprüfen und ein Signal abzugeben, ob das Empfangssignal 24 ein gültiges Empfangssignal darstellt oder nicht.

Im digitalen Filter werden die Rechteckimpulse am Ausgang des Komparators 18 beispielsweise mit einer Frequenz $f_2$ abgetastet, die etwa zehnmal grösser als die Frequenz $f_1$ ist. Die abgetasteten Werte stellen eine Folge f von Bits dar, deren Wert 0 oder 1 sein kann. Das Filter ist nun eingerichtet zur Durchführung der folgenden Aufgaben:

- Detektion positiver oder negativer Flanken der Rechteckimpulse. Eine gültige positive Flanke liegt dann vor, wenn acht aufeinanderfolgende Werte der Folge f gleich der Bitfolge "000xx111" sind, wobei x den Wert 0 oder den Wert 1 haben kann. Eine gültige negative Flanke liegt vor, wenn acht aufeinanderfolgende Werte der Folge f gleich der Bitfolge "111xx000" sind.
- Abgabe eines Signals, das angibt, ob die erste detektierte gültige Flanke eine positive oder eine negative Flanke war.

- Abgabe eines Signals zum Stoppen der mit dem Sendesignal gestarteten Zeitmessung, sobald die dritte gültige positive bzw. die dritte gültige negative Flanke detektiert wird. Welche Art der Flanke zur Erzeugung des Stoppsignals dienen soll, ist mittels eines Steuersignals kontrollierbar.

- Abgabe eines Signals, das angibt, ob wenigstens sieben gültige Flanken detektiert wurden.

Mit dem Filter sind Störsignale unterdrückbar, deren Frequenz verschieden von den - möglichst nahe beieinanderliegenden - Frequenzen $f_1$ und $f_R$ ist.

Sofern der Filter oder das Zeitstoppglied 19 eingerichtet sind, die Richtung der ersten detektierten Flanke zu erkennen, wird diese Richtung beim Abgleich in einem Speicher gespeichert. Im Normalbetrieb wird dann die Richtung der detektierten Flanke mit dieser gespeicherten Flankenrichtung verglichen. Auf diese Weise lässt sich ebenfalls feststellen, ob, z.B. infolge von Alterungseffekten, plötzlich der Nulldurchgang zwischen den Extrema $E_2$ und $E_3$ anstelle des Nulldurchgangs zwischen den Extrema $E_1$ und $E_2$ die Zeitmessung stoppt. Der Ultraschall-Messwertgeber wird dann entsprechende Massnahmen treffen, damit nicht fehlerbehaftete Messresultate auftreten.

Das Abgleichverfahren wird durchgeführt für den Fall, dass der Ultraschallwandler 1 der Sender und der Ultraschallwandler 2 der Empfänger ist, sowie für den Fall, dass der Ultraschallwandler 2 der Sender und der Ultraschallwandler 1 der Empfänger ist.

Nachdem die Parameter für die optimale Einstellung mittels der Betriebsart "Abgleich" bestimmt worden sind, können in der Betriebsart "Normal" Laufzeitmessungen durchgeführt werden, um die Schallgeschwindigkeit im Medium und/oder die Strömungsgeschwindigkeit des Mediums, oder andere Grössen zu bestimmen.

Die Laufzeiten $t_+$ und $t_-$ in bzw. gegen die Strömungsrichtung des Mediums sind bekanntlich gegeben durch

$$t_+ = d/(c+v) \text{ und } t_- = d/(c-v), \tag{1}$$

wobei c die Schallgeschwindigkeit und v die Strömungsgeschwindigkeit des Mediums bezeichnen.

Der Stand des Zählers des Zeitmessglieds 9 $N_+$ bzw. N- ist gegeben durch

$$t_+ = N_+ * T_{f2} \text{ bzw. } t_- = N\text{-} * T_{f2}, \tag{2}$$

wobei $T_{f2}$ die Zeit zwischen zwei Abtastimpulsen bezeichnet.

Unter der Bedingung v<<c ergibt sich

$$c \cong \frac{2d}{(N_+ + N_-)T_{f2}} \text{ und} \tag{3}$$

$$v \cong \frac{c^2 T_{f2}}{2d}(N_- - N_+) = \frac{2d(N_- - N_+)}{T_{f2}(N_- + N_+)^2} \tag{4}$$

Ist der Ultraschall-Messwertgeber korrekt in das vorgesehene Rohrsystem eingebaut, dann ist die Zahl $N_-$ grösser als die Zahl $N_+$. Bei genügend grosser Strömungsgeschwindigkeit kann deshalb der korrekte Einbau selbsttätig erkannt werden.

Bei dem z.B. aus der EP 616198 bekannten Phasendifferenzmessverfahren senden beide Ultraschallwandler 1 und 2 gleichzeitig einen Impulszug von beispielsweise 64 Wellenzügen. Die von den Ultraschallwandlern 1 und 2 anschliessend gleichzeitig gemessenen Empfangssignale werden einem Phasenmessglied zugeführt und die Strömungsgeschwindigkeit aus der Phasendifferenz ermittelt. Dieses Messverfahren bietet zwar eine hohe Genauigkeit, weist aber den Nachteil auf, dass der Messbereich auf eine Phasendifferenz im Bereich von 0 bis $2\pi$ eingeschränkt ist. Um den Messbereich auf Phasendifferenzen zu erweitern, die grösser als $2\pi$ sind, erfolgt gemäss der Erfindung eine Kombination der beiden Messverfahren. Dabei wird mittels einer direkten Laufzeitmessung aus der Gleichung (4) ein grober Näherungswert für die Strömungsgeschwindigkeit v bestimmt. Dieser Näherungswert dient dazu, die Mehrdeutigkeit beim Phasendifferenzmessverfahren zu eliminieren.

Bei einem besonderen Ausführungsbeispiel wird bei der Phasenmessung der flussaufwärts gelegene Ultraschallwandler 1 mit dem Sendesignal beaufschlagt. Der flussabwärts gelegene Ultraschallwandler 2 wird um eine Zeit $t_{v1}$ oder eine Zeit $t_{v2}$ verzögert mit dem gleichen Sendesignal beaufschlagt. Die Verzögerung erfolgt mit der Zeit $t_{v1}$, falls die Differenz $N_- - N_+$ kleiner als ein vorbestimmter Wert n ist, die Verzögerung erfolgt mit der Zeit $t_{v2}$, falls die Differenz $N_- - N_+$ grösser oder gleich dem Wert n ist. Bei der Verzögerung mit der Zeit $t_{v1}$ befindet sich der Ultraschall-Messwertgeber im normalen Messbereich, bei der Verzögerung mit der Zeit $t_{v2}$ im oberen Messbereich. Die mit dem Phasenmessglied ermittelte Strömungsgeschwindigkeit wird gemäss der Verzögerungszeit $t_{v1}$ bzw. $t_{v2}$ korrigiert. Um im

Übergangsbereich vom normalen in den oberen Messbereich ein ständiges Hin- und Herschalten zu vermeiden, wird mit Vorteil eine Hysterese eingebaut, d.h. der Wert n wird vom aktuellen Messbereich abhängig gemacht.

**Patentansprüche**

1. Verfahren zur selbsttätigen Bestimmung der im Normalbetrieb eines Ultraschall-Messwertgebers bei Laufzeitmessungen zu verwendenden Sendepolarität eines wechselförmigen Signals, mit dem ein als Sender dienender Ultraschallwandler (1; 2) beaufschlagt wird, und, fakultativ, weiterer Parameter, welche die Laufzeitmessung beeinflussen, wobei das von einem als Empfänger dienenden Ultraschallwandler (2; 1) erzeugte Empfangssignal (24) einem Komparator (18) zugeführt wird und wobei die erste oder eine andere, vorbestimmte Flanke der Ausgangsimpulse des Komparators (18) die Laufzeitmessung stoppt, **mit den folgenden Schritten:**

   - Durchführen von n einzelnen Laufzeitmessungen mit jeweils verschiedenen Werten der Parameter, wobei einer der Parameter die Sendepolarität ist,
   - Bestimmen derjenigen Laufzeit, die vorgegebenen Kriterien genügt,
   - Bestimmen der Werte der Parameter, die zu dieser Laufzeit gehören, und
   - Ändern der Werte dieser Parameter gemäss vorbestimmten Gesetzmässigkeiten.

2. Verfahren nach Anspruch 1, **dadurch gekennzeichnet, dass** an die beiden Eingänge des Komparators (18) eine vorbestimmte Gleichspannung $\Delta U_1$ angelegt wird, wobei das Vorzeichen der Spannung $\Delta U_1$ einen Parameter darstellt.

3. Verfahren nach Anspruch 1 oder 2, **dadurch gekennzeichnet, dass** die Flankenrichtung der Ausgangsimpulse des Komparators (18), die die Laufzeitmessung stoppt, einen Parameter darstellt.

4. Verfahren nach einem der vorhergehenden Ansprüche, **dadurch gekennzeichnet, dass** die Gesetzmässigkeiten so festgelegt sind, dass im Normalbetrieb die dem Nulldurchgang zwischen dem ersten und dem zweiten Extremum des Empfangssignals entsprechende Flanke der Ausgangsimpulse die Laufzeitmessung stoppt.

5. Verfahren nach Anspruch 4, **dadurch gekennzeichnet, dass** die Gesetzmässigkeiten so festgelegt sind, dass im Normalbetrieb die Differenz zwischen dem zu detektierenden Extremum und der am anderen Eingang des Komparators (18) anliegenden Vergleichsspannung möglichst gross ist.

6. Verfahren nach Anspruch 4, **dadurch gekennzeichnet, dass** die Gesetzmässigkeiten so festgelegt sind, dass im Normalbetrieb die Spannungsdifferenz zwischen den beiden Eingängen des Komparators (18) unmittelbar vor dem Eintreffen des Empfangssignals (24) möglichst gross ist.

7. Verfahren nach einem der vorhergehenden Ansprüche, **dadurch gekennzeichnet, dass** die eine Elektrode (3; 4; 3'; 4') des sendenden Ultraschallwandlers (1; 2) auf Masse gelegt ist und dass die andere Elektrode (3; 4; 3'; 4') des sendenden Ultraschallwandlers (1; 2) vor dem Senden eines Ultraschallbursts (10; 11) für eine vorbestimmte Zeitdauer auf eine Spannung gelegt wird, die derart bemessen ist, dass die Gleichspannungskomponente des Ultraschallbursts (10; 11), mit dem der sendende Ultraschallwandler (1; 2) beaufschlagt wird, annähernd verschwindet.

8. Ultraschall-Messwertgeber zur Bestimmung der Durchflussmenge eines durch ein Rohrsystem strömenden Mediums, mit zwei Ultraschallwandlern (1; 2), zwischen denen eine Ultraschallmessstrecke gebildet ist, wobei die Ultraschallwandler (1; 2) während einer Sendephase gleichzeitig einen aus mehreren Wellenzügen bestehenden Ultraschallimpuls aussenden und den nach Durcheilung der Messstrecke empfangenen Ultraschallimpuls während einer Empfangsphase einem Phasenmesser zuleiten, der die durch die Laufzeitdifferenzen verursachte Phasenverschiebung $\alpha$ zwischen den Wellenzügen des flussaufwärts bzw. flussabwärts gesandten Ultraschallimpulses in Einheiten proportional zum Volumen des pro Zeiteinheit durch den Messwertgeber fliessenden Mediums umwandelt, **dadurch gekennzeichnet, dass** mittels einer direkten Laufzeitmessung eines weiteren durch die Messstrecke gesandten Ultraschallimpulses (10; 11) ein Näherungswert für die Strömungsgeschwindigkeit ermittelt wird und dass mit dem Näherungswert die Mehrdeutigkeit der Phasenverschiebung $\alpha$ eliminiert wird.

9. Ultraschall-Messwertgeber nach Anspruch 8, **dadurch gekennzeichnet, dass** bei der Phasenmessung das Sende- oder das Empfangssignal eines der beiden Ultraschallwandler (1; 2) in Funktion des vorgängig ermittelten Näherungswertes für die Strömungsgeschwindigkeit elektronisch um eine Zeit $t_v$ verzögert wird und dass bei der Bestimmung der Strömungsgeschwindigkeit der aus der Phasenmessung erhaltene Wert um diese Verzögerung $t_v$ korrigiert wird.

10. Ultraschall-Messwertgeber nach Anspruch 8, **dadurch gekennzeichnet, dass** bei der direkten Laufzeitmessung periodisch der Wert des grössten Extremums des Empfangssignals (24) bestimmt wird und dass die Parameter, welche die Laufzeitmessung beeinflussen, mittels eines Verfahrens nach einem der Ansprüche 1 bis 7 neu bestimmt werden, sofern der Betrag des grössten Extremums einen vorbestimmten Wert unterschreitet.

# Fig.1

# Fig.2a

# Fig.2b

Fig. 2c

Fig. 2d

Fig. 3a

Fig. 3b

Fig. 3c

Fig. 3d

Europäisches
Patentamt

**EUROPÄISCHER RECHERCHENBERICHT**

Nummer der Anmeldung

EP 97 10 1252

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP 0 616 198 A (LANDIS & GYR BUSINESS SUPPORT) 21.September 1994 * das ganze Dokument * --- | 1-10 | G01F1/66 |
| A | DE 34 40 873 A (FUJI ELECTRIC CO LTD) 30.Mai 1985 * Seite 13, Zeile 30 - Seite 16, Zeile 21; Abbildung 2 * --- | 1 | |
| A | EP 0 451 356 A (LANDIS & GYR BETRIEBS AG) 16.Oktober 1991 * Spalte 3, Zeile 11 - Zeile 24; Abbildung * --- | 1 | |
| A | US 5 012 449 A (TODD JOHN D) 30.April 1991 * Spalte 5, Zeile 8 - Spalte 7, Zeile 9; Abbildungen 1-3 * ----- | 1 | |

| | RECHERCHIERTE SACHGEBIETE (Int.Cl.6) |
|---|---|
| | G01F |

Der vorliegende Recherchenbericht wurde für alle Patentansprüche erstellt

| Recherchenort | Abschlußdatum der Recherche | Prüfer |
|---|---|---|
| DEN HAAG | 9.Juli 1997 | Heinsius, R |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
Dokument

EPO FORM 1503 03.82 (P04C03)